# EUROPEAN PATENT SPECIFICATION

(11) **EP 1 182 925 B1**
(45) Date of publication and mention of the grant of the patent: **04.08.2004**
(21) Application number: 00935324.4
(22) Date of filing: 02.06.2000
(51) Int. Cl.: A01M 7/00

(54) **AGRICULTURAL SPRAY APPARATUS**
LANDWIRTSCHAFTLICHE SPRÜHVORRICHTUNG
PULVERISATEUR A USAGE AGRICOLE

(30) Priority: 04.06.1999 GB 9912879
(43) Date of publication of application: 06.03.2002
(73) Proprietor: McAvoy, Paul, Holme, Peterborough PE7 3PT (GB)
(72) Inventor: McAvoy, Paul, Holme, Peterborough PE7 3PT (GB)
(74) Representative: March, Gary Clifford
(86) International application number: PCT/GB2000/001994
(87) International publication number: WO 2000/074481

(56) References cited:
- FR-A- 1 390 627
- FR-A- 2 565 000
- GB-A- 1 504 697
- US-A- 4 149 734
- US-A- 5 098 018

## Description

### Technical Field

The invention relates to agricultural and the like spray apparatus and more particularly to self-propelled spray apparatus.

### Background

It is known to provide self-propelled agricultural spray apparatus usually based on a modified agricultural tractor. With known devices it is normal for the tractor engine and ancillaries to be at the front of the tractor and the tank of liquid spray to be at the rear of the tractor. Such an arrangement is not ideal since in use, as the liquid in the spray tank is consumed, the weight distribution on the tractor wheels change detrimentally to the performance of the tractor. Extra weight may be added to the tractor to act as a counterweight and to reduce the weight of the spray liquid as a proportion of the total weight of the sprayer. However, it is undesirable to add extra weight to the tractor since this might tend to increase soil compaction, and generally reduce performance.

It is an aim of the invention to mitigate the above-described problem with known sprayers.

### DISCLOSURE OF INVENTION

According to US-A-5 098 018 which discloses the preamble of claim 1, a self-propelled agricultural sprayer comprises a land vehicle having a chassis, ground engaging wheels on the chassis, a prime mover mounted in the chassis to drive the vehicle and a liquid spray tank disposed adjacent to the prime mover, and a frame pivotally mounted on the chassis.

According to the invention the spray tank is mounted on the frame which is carried on the chassis and is mounted for pivotable movement with respect to the chassis. The sprayer includes a spray boom and this is also mounted on the frame. The boom may be mounted on lift arms on the frame.

Preferably, the spray tank will be mounted on the chassis for movement between its operative position adjacent to or surrounding the prime mover and a raised position which allows access to the prime mover and to associated components e.g. for maintenance and repair. Movement of the tank is a wholly or principally pivoting movement, typically about an axis extending generally transversely of the vehicle. Such movement of the spray tank may be achieved by jack means, e.g. in much the same way as the cab of a truck is tilted for access to the truck engine.

In preferred embodiments of the invention, the prime mover is longitudinally disposed between front and rear axle lines of the vehicle, for example, in a position substantially centrally of the chassis. This arrangement is advantageous in providing a preferred distribution of weight between the wheels of the sprayer.

The liquid spray tank may be in the form of a saddle tank at least partially surrounding the prime mover. Such an arrangement also allows the centre of gravity of the sprayer to be low to improve the stability of the sprayer.

In this way the weight distribution of the sprayer may be substantially unaffected by the amount of the liquid spray in the tank.

### BRIEF DESCRIPTION OF DRAWINGS

An embodiment of the invention is diagrammatically illustrated, by way of example, in the accompanying drawings, in which:-
Figure 1 is a somewhat diagrammatic side view of a self-propelled agricultural spray apparatus;
Figure 2 is a front view of the spray apparatus of Figure 1;
Figure 3 is a rear view of the spray apparatus of Figure 1, and
Figure 4 is a side view generally corresponding to that of Figure 1, and showing the spray apparatus in a maintenance position.

### BEST MODE FOR CARRYING OUT THE INVENTION

In the drawings, a self-propelled agricultural sprayer 10 comprises a land vehicle having a chassis 12, ground engaging wheels 14 on the chassis 12. A vehicle suspension 26 may be provided between the wheels 14 and the chassis; the suspension 26 may be conventional or may comprise air bags. This embodiment, as is conventional, includes four wheels 14 mounted in pairs at front and rear transverse axle lines (which may include actual axles or may be hypothetical lines in a vehicle with independent suspension).

The vehicle further comprises a prime mover 16 (in this embodiment, a diesel internal combustion engine) mounted in the chassis 12 and disposed substantially centrally thereof, between the axle lines. A transmission 18 is mounted in the chassis and is connected to the prime mover to drive the vehicle wheels 14.

A cab 20 for the driver/operator is mounted towards the front of the chassis 12 and a spray boom 24 is mounted towards the rear of the chassis 12. The spray boom 24 may be of generally conventional foldable form.

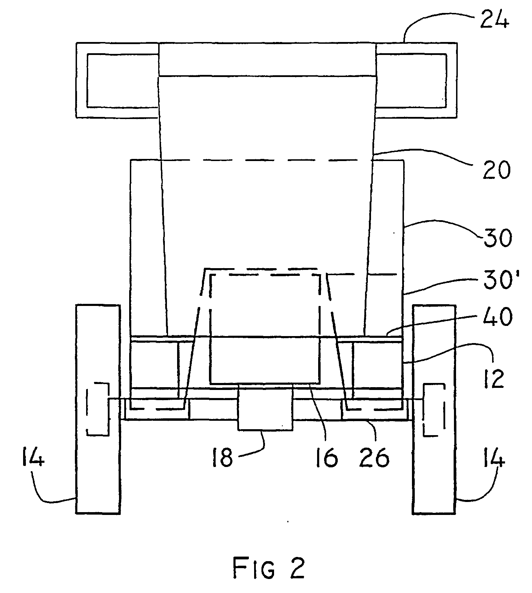

A spray liquid tank 30 is mounted on the chassis and is in the form of a saddle tank positioned over and straddling the prime mover 16 in a fore-and-aft location that places it between the wheels 14. As can be seen in Figure 2, the tank extends above the prime mover 16, and has downward extensions that extend laterally on both sides of the prime mover 16. In this way the weight distribution of the sprayer remains substantially unaffected by the amount of the liquid spray in the tank 30. The saddle tank configuration of such a tank also allows the centre of gravity of the sprayer 10 to be low to improve the stability of the sprayer 10. The saddle tank 30 may comprise a separate compartment 30' for clean water, or for washings as desired.

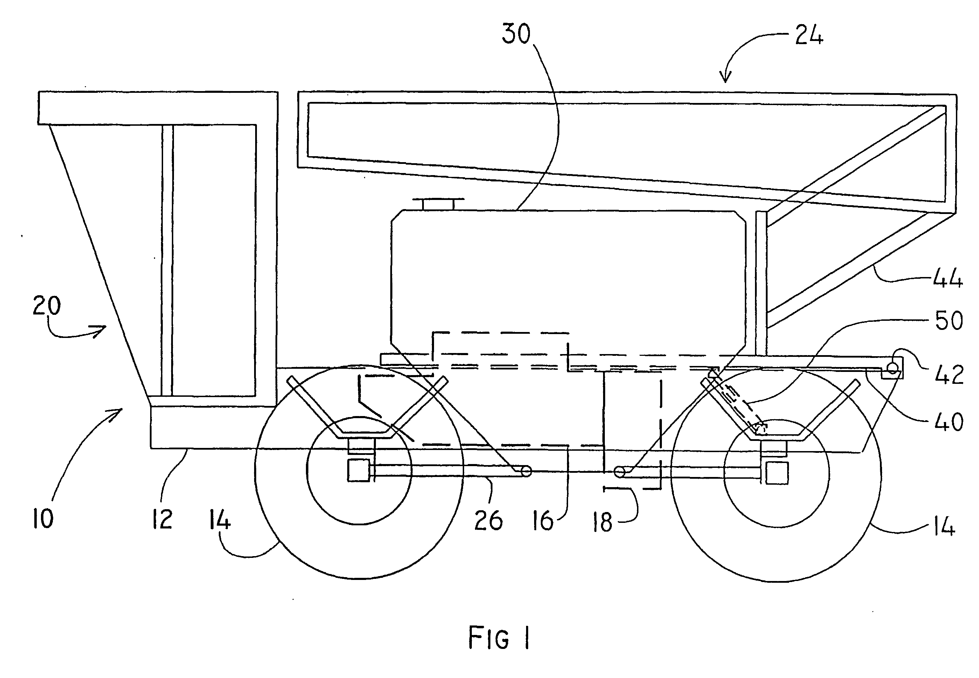

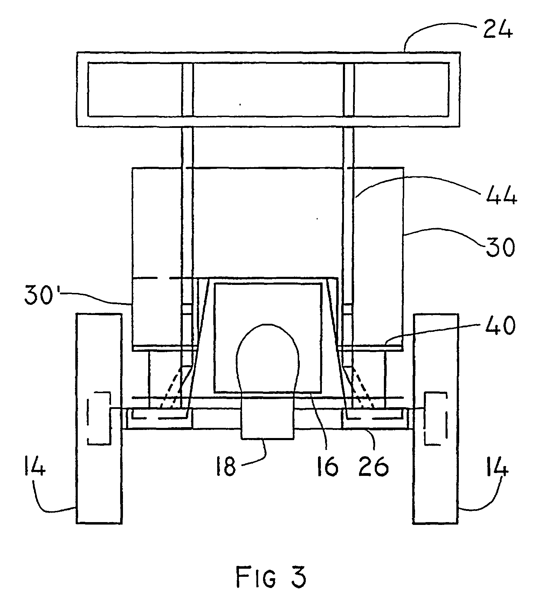

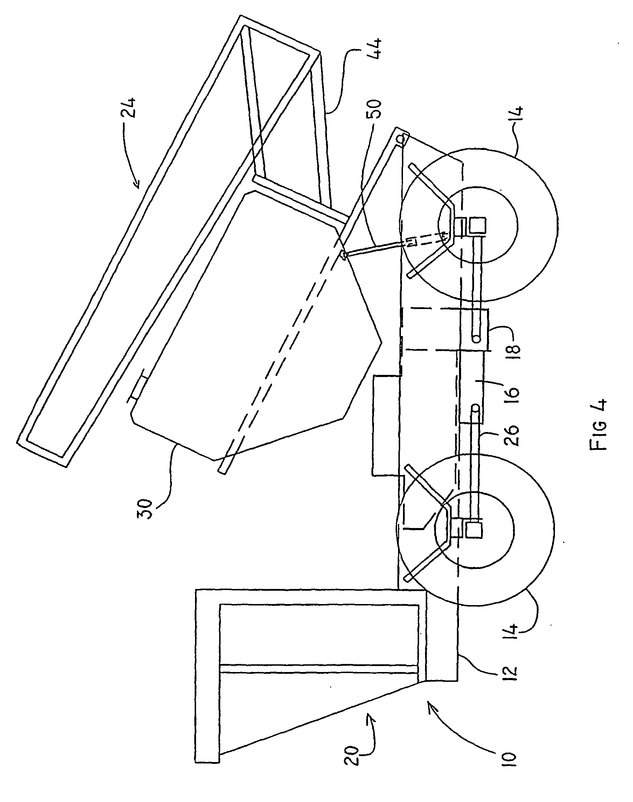

The spray tank 30 is mounted on a frame 40 which is pivotally mounted on the rear of the chassis (at 42). The tank 30 can be moved between its operative position adjacent to and surrounding the prime mover 16, as shown in Figures 1 to 3, by pivoting the frame upwardly and rearwardly to a raised position as shown in Figure 4 which allows access to the prime mover e.g. for maintenance and repair. Such movement of the spray tank can be achieved by hydraulic jack means 50 connected between the tank frame 40 and chassis 12 e.g. in much the same way as the cab of a truck is tilted for access to the truck engine.

The spray boom 24 is carried on lift arms 44 mounted on the spray tank frame 40.

The vehicle transmission shown in the drawings is mechanical, but could, if desired, be any other suitable type, for example, it may be hydrostatic.

### INDUSTRIAL APPLICABILITY

The invention thus provides a simple way of maintaining a desired weight distribution in a self-propelled sprayer which is unaffected by the quantity of liquid in the spray tank and which avoids problems with access to the vehicle engine and transmission e.g. for maintenance or repair.

## Claims

1. A self-propelled agricultural sprayer comprising a land vehicle having a chassis supporting a spray boom, ground engaging wheels on the chassis, a prime mover mounted in the chassis to drive the ground engaging wheels, a liquid spray tank disposed adjacent to the prime mover and a frame pivotally mounted on the chassis **characterized in that** the spray tank and the spray boom are mounted on the frame.

2. A self-propelled agricultural sprayer according to claim 1 in which the spray boom is mounted on lift arms on the frame.

3. A self-propelled agricultural sprayer according to claim 1 or 2 in which the prime mover and liquid spray tank are both disposed between front and rear axle lines of the vehicle.

4. A self-propelled agricultural sprayer according to any preceding claim in which the prime mover is longitudinally disposed in the chassis.

5. A self propelled agricultural sprayer according to any preceding claim in which the prime mover is disposed in the chassis substantially centrally thereof.

6. A self propelled agricultural sprayer according to any preceding claim in which the pivotal mounting of the frame permits movement of the spray tank between an operative position adjacent to or surrounding the prime mover and a raised position which allows access to the prime mover.

7. A self propelled agricultural sprayer according to claim 6 in which the frame is pivotally mounted about an axis extending generally transversely of the vehicle.

8. A self propelled agricultural sprayer according to claim 6 or 7 further comprising jack means operable to move the spray tank between its operative and its raised position.

9. A self propelled agricultural sprayer according to any preceding clam in which the spray tank is disposed generally above the prime mover.

10. A self propelled agricultural sprayer according to any preceding claim in which the spray tank is in the form of a saddle tank.

11. A self-propelled agricultural sprayer according to claim 10 in which the saddle tank at least partially surrounds the prime mover.

12. A self propelled agricultural sprayer according to claim 11 as dependent upon any one of claims 9 to 11 in which the saddle tank is positioned generally over the prime mover and includes downward extensions which extend laterally on both sides of the prime mover.

## Patentansprüche

1. Ein selbstfahrendes landwirtschaftliches Sprühgerät, welches ein Landfahrzeug mit einem Fahrgestell umfasst, das einen Sprühausleger trägt, Räder auf dem Fahrgestell im Eingriff mit dem Gelände, eine im Fahrgestell montierte Antriebsmaschine für den Antrieb der im Eingriff mit dem Gelände stehenden Räder, einen in der Nähe der Antriebsmaschine angeordneten Flüssigkeits-Sprühtank und einen auf dem Fahrgestell schwenkbar angebrachten Rahmen, **dadurch gekennzeichnet, dass** der Sprühtank und der Sprühausleger auf dem Rahmen angebracht sind.

2. Selbstfahrendes landwirtschaftliches Sprühgerät nach Anspruch 1, bei welchem der Sprühausleger auf Hubarmen auf dem Rahmen angebracht ist.

3. Selbstfahrendes landwirtschaftliches Sprühgerät nach Anspruch 1 oder 2, bei welchem sowohl die Antriebsmaschine als auch der Flüssigkeits-Sprühtank zwischen Vorderachsen- und Hinterachsenlinien des Fahrzeugs angebracht sind.

4. Selbstfahrendes landwirtschaftliches Sprühgerät nach einem der vorhergehenden Ansprüche, bei welchem die Antriebsmaschine längs im Fahrgestell angeordnet ist.

5. Selbstfahrendes landwirtschaftliches Sprühgerät nach einem der vorhergehenden Ansprüche, bei welchem die Antriebsmaschine im Fahrgestell im wesentlichen mittig desselben angeordnet ist.

6. Selbstfahrendes landwirtschaftliches Sprühgerät nach einem der vorhergehenden Ansprüche, bei welchem die schwenkbare Befestigung des Rahmens die Bewegung des Sprühtanks zwischen einer Betriebsposition angrenzend an die Antriebsmaschine oder diese umgebend sowie eine angehobene Position gestattet, welche den Zugang zur Antriebsmaschine ermöglicht.

7. Selbstfahrendes landwirtschaftliches Sprühgerät nach Anspruch 6, bei welchem der Rahmen schwenkbar um eine Achse befestigt ist, die sich im allgemeinen diagonal zum Fahrzeug erstreckt.

8. Selbstfahrendes landwirtschaftliches Sprühgerät nach Anspruch 6 oder 7, das weiterhin eine Hebevorrichtung umfasst, die betätigt werden kann, um den Sprühtank zwischen seiner Betriebsposition und seiner angehobenen Position zu bewegen.

9. Selbstfahrendes landwirtschaftliches Sprühgerät nach einem der vorhergehenden Ansprüche, bei welchem der Sprühtank im allgemeinen oberhalb der Antriebsmaschine angeordnet ist.

10. Selbstfahrendes landwirtschaftliches Sprühgerät nach einem der vorhergehenden Ansprüche, bei welchem der Sprühtank die Form eines Satteltanks aufweist.

11. Selbstfahrendes landwirtschaftliches Sprühgerät nach Anspruch 10, bei welchem der Satteltank zumindest zum Teil die Antriebsmaschine umgibt.

12. Selbstfahrendes landwirtschaftliches Sprühgerät nach Anspruch 11, abhängig von einem der Ansprüche 9 bis 11, bei welchem der Satteltank im allgemeinen über der Antriebsmaschine angeordnet ist und sich nach unten erstreckende Verlängerungen aufweist, die sich seitlich auf beiden Seiten der Antriebsmaschine erstrecken.

## Revendications

1. Pulvérisateur automoteur à usage agricole, comprenant un véhicule terrestre ayant un châssis supportant une rampe, des roues en prise avec le sol sur le châssis, un moteur d'entraînement monté sur le châssis pour entraîner les roues en prise avec le sol, une cuve à liquide disposée de manière adjacente au moteur d'entraînement et un cadre monté sur le châssis de manière pivotante, **caractérisé en ce que** la cuve et la rampe sont montées sur le cadre.

2. Un pulvérisateur automoteur à usage agricole selon la revendication 1, dans lequel la rampe est montée sur des bras de relevage sur le cadre.

3. Un pulvérisateur automoteur à usage agricole selon la revendication 1 ou 2, dans lequel le moteur d'entraînement et la cuve à liquide sont tous deux disposés entre les lignes des essieux avant et arrière du véhicule.

4. Un pulvérisateur automoteur à usage agricole selon l'une quelconque des revendications précédentes, dans lequel le moteur d'entraînement est disposé sur le châssis de manière longitudinale.

5. Un pulvérisateur automoteur à usage agricole selon l'une quelconque des revendications précédentes, dans lequel le moteur d'entraînement est disposé sur le châssis de manière sensiblement centrale par rapport à celui-ci.

6. Un pulvérisateur automoteur à usage agricole selon l'une quelconque des revendications précédentes, dans lequel le montage pivotant du cadre permet le mouvement de la cuve entre une position de fonctionnement, adjacente au moteur d'entraînement ou encadrant celui-ci, et une position relevée qui permet d'accéder au moteur d'entraînement.

7. Un pulvérisateur automoteur à usage agricole selon la revendication 6, dans lequel le cadre est monté de manière pivotante sur un axe s'étendant de manière généralement transversale par rapport au véhicule.

8. Un pulvérisateur automoteur à usage agricole selon la revendication 6 ou 7, comprenant en outre des moyens de vérin de levage actionnables pour déplacer la cuve entre sa position de fonctionnement et sa position relevée.

9. Un pulvérisateur automoteur à usage agricole selon l'une quelconque des revendications précédentes, dans lequel la cuve est disposée généralement au-dessus du moteur d'entraînement.

10. Un pulvérisateur automoteur à usage agricole selon l'une quelconque des revendications précédentes, dans lequel la cuve est une cuve en forme de selle.

11. Un pulvérisateur automoteur à usage agricole selon la revendication 10, dans lequel la cuve en forme de selle entoure au moins en partie le moteur d'entraînement.

12. Un pulvérisateur automoteur à usage agricole selon la revendication 11 en ce qu'elle dépend de l'une quelconque des revendications 9 à 11, dans lequel la cuve en forme de selle est positionnée généralement au-dessus du moteur d'entraînement et comprend des extensions descendantes qui s'étendent latéralement des deux côtés du moteur d'entraînement.
